# EUROPÄISCHE PATENTSCHRIFT

(11) **EP 1 048 920 B1**
(45) Veröffentlichungstag und Bekanntmachung des Hinweises auf die Patenterteilung: **30.06.2004**
(21) Anmeldenummer: 00104756.2
(22) Anmeldetag: 04.03.2000
(51) Int. Cl.: F41A 21/22, C23C 8/36

(54) **Verfahren zur Innenbeschichtung eines Waffenrohres**
Method for coating the interior surface of a gun barrel
Procédé de revêtement de la surface interne d'un tube de canon

(30) Priorität: 30.04.1999 DE 19919688
(43) Veröffentlichungstag der Anmeldung: 02.11.2000
(73) Patentinhaber: Rheinmetall W & M GmbH, 29345 Unterlüss (DE)
(72) Erfinder: Warnecke, Christian, 29225 Celle (DE)

(56) Entgegenhaltungen:
- WO-A-98/34440
- FR-A- 2 460 340
- GB-A- 2 304 873

## Beschreibung

Die Erfindung betrifft ein Verfahren zur Innenbeschichtung eines Waffenrohres, auf dessen innere Oberfläche mindestens in einem Teilbereich mindestens eine Schicht eines Schichtwerkstoffes zur Vermeidung von Erosionen aufgebracht wird.

In der Waffentechnik bewirken leistungsgesteigerte Munitionsarten aufgrund ihrer beim Abschuß entstehenden hohen Gastemperaturen und Strömungsgeschwindigkeiten, insbesondere bei den aus Stahl bestehenden Waffenrohren, starke Erosionen, die das jeweilige Waffenrohr bereits vor Erreichen seiner Ermüdungslebensdauer verschleißen. Es ist bereits bekannt, die entsprechenden Waffenrohre zwecks Vermeidung derartiger Erosionen mit einer Hartchromschicht zu versehen. Dabei wird der Hartchrom elektrolytisch an der inneren Oberfläche des Waffenrohres abgeschieden.

Nachteilig ist bei diesem bekannten Verfahren unter anderem, daß die elektrolytisch abgeschiedenen Hartchromschichten der leistungsgesteigerten Munition nicht standhalten. An den sich dadurch ergebenden Chromausbrüchen entstehen nach und nach starke Erosionen.

Aus der DE 195 44 824 A1 und der DE 197 41 028 C1 sind bereits Verfahren zum Härten von Waffenrohren mit Hilfe von Laserstrahlen bekannt. Dabei werden die Laserstrahlen axial in das Waffenrohr eingekoppelt und mit Hilfe einer in dem Waffenrohr verschiebbar angeordneten Strahlenumlenkoptik senkrecht auf die zu härtende Innenfläche des Waffenrohres gestrahlt.

Der Erfindung liegt die Aufgabe zugrunde, ein Verfahren zur Innenbeschichtung eines Waffenrohres anzugeben, mit dem zur Vermeidung von Erosionen hochschmelzende Schichtwerkstoffe auf die innere Oberfläche des Waffenrohres aufgebracht werden können, wobei die auf dem Waffenrohr aufgebrachte Beschichtung insbesondere eine hohe Haftfestigkeit besitzen soll.

Diese Aufgabe wird erfindungsgemäß durch die Merkmale des Anspruchs 1 gelöst. Weitere vorteilhafte Ausgestaltungen der Erfindung offenbaren die Unteransprüche.

Der Erfindung liegt der Gedanke zugrunde, die Innenbeschichtung des jeweiligen Waffenrohres durch Laser-Auftragsschweißen vorzunehmen, wobei auf die innere Oberfläche des Waffenrohres ein entsprechender Laserstrahl gelenkt wird, der die oberflächennahen Bereiche des Waffenrohres aufschmilzt. Der Schichtwerkstoff wird in pulver-, draht- oder bandförmiger Form kurz vor dem Auftreffen des Laserstrahles auf die innere Oberfläche des Waffenrohres eingebracht und durch diesen geschmolzen, so daß sich im oberflächennahen Bereich des Waffenrohres ein den geschmolzenen Waffenrohrwerkstoff und den Schichtwerkstoff enthaltendes Schmelzbad ausbildet, welches bei der Weiterbewegung des Laserstrahles erstarrt.

Durch eine entsprechende Relativbewegung zwischen dem Laserstrahl und dem Waffenrohr kann eine flächige Beschichtung der inneren Oberfläche des Waffenrohres mit dem Schichtwerkstoff erzielt werden. Außerdem ist es durch Wiederholung des Beschichtungsvorganges möglich, unterschiedliche Schichten nacheinander aufzubringen und das Waffenrohr an die jeweiligen Anforderungen optimal anzupassen.

Ein wesentlicher Vorteil des erfindungsgemäßen Verfahrens besteht darin, daß hochschmelzende Werkstoffe, wie Niob, Molybdän, Tantal, Hafnium, Vanadin, Wolfram, Zirkonium oder deren Legierungen, in Schichtdicken bis zu einigen mm auf die innere Oberfläche des Waffenrohres aufgebracht werden können. Demgegenüber lassen sich mit den bekannten galvanischen Verfahren Werkstoffe wie Molybdän oder Tantal aus wässerigen Elektrolyten nicht abscheiden. Außerdem lassen sich mit den bekannten Verfahren lediglich Schichtdicken von einigen Zehntelmillimeter erzeugen.

Die Beschichtung kann sowohl auf der gesamten Rohrinnenfläche als auch selektiv aufgetragen werden. In beiden Fällen ist allerdings zu beachten, daß das Waffenrohr vor der Beschichtung an die entsprechende Wandstärke der Beschichtung angepaßt werden muß, d.h., der zu beschichtende Rohrabschnitt muß einen Durchmesser besitzen, der dem Kaliberdurchmesser zuzüglich der doppelten Wandstärke der Beschichtung entspricht.

Um eine Beschichtung des Waffenrohres mit hochschmelzenden Metallsalzen wie Karbiden oder Nitriden vorzunehmen, hat es sich als vorteilhaft erwiesen, zusätzlich zu dem entsprechenden Metall dem Schmelzbad ein geeignetes Gas (z.B. Methan zur Bildung von Karbiden oder Stickstoff zur Bildung von Nitriden) zuzuführen.

Weitere Einzelheiten und Vorteile dieser Erfindung ergeben sich aus dem folgenden anhand von Figuren erläuterten Ausführungsbeispielen. Es zeigen:
- Fig. 1-3: den zu beschichtenden Rohrabschnitt eines Waffenrohres vor, während und nach Durchführung der Innenbeschichtung sowie
- Fig. 4: den in den Fig. 1-3 dargestellten Rohrabschnitt nach einer mechanischen Nachbearbeitung.

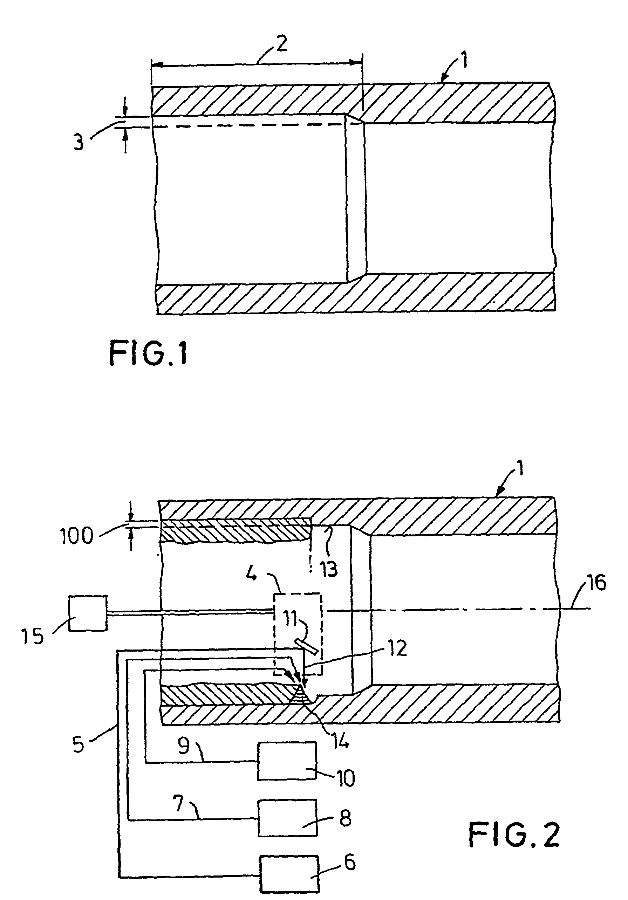

In Fig. 1 ist mit 1 ein Waffenrohr bezeichnet, welches in einem Teilbereich 2 mit einem Hartmetall, z.B. Niob, beschichtet werden soll. In dem zu beschichtenden Teilbereich 2 weist das Waffenrohr 1 gegenüber dem Kaliberdurchmesser ein Übermaß 3 auf.

Zur Beschichtung des Waffenrohres 1 ist ein Laserkopf 4 in dem Waffenrohr 1 angeordnet (Fig. 2), welcher über einen Spiegel bzw. Lichtleitfaser 5 mit einem CO₂- bzw. Nd:YAG-Laser 6 ausreichender Leistung verbunden ist. Außerdem ist der Laserkopf 4 über eine erste Schlauchleitung 7 mit einem Behälter 8, der den pulverförmigen Schichtwerkstoff enthält, und über eine zweite Schlauchleitung 9 mit einer Schutzgasquelle 10 (z.B. mit Argon gefüllte Gasflasche) verbunden.

Der Laserkopf 4 umfaßt im wesentlichen einen (gegebenenfalls gekühlten) Umlenkspiegel 11, der den von der Lichtleitfaser 5 kommenden Laserstrahl 12 auf die zu härtende innere Oberfläche 13 des Waffenrohres 1 fokussiert.

Soll eine Beschichtung des Waffenrohres 1 vorgenommen werden, so wird der Laser 6 aktiviert und die Laserstrahlen 12 auf die innere Oberfläche 13 des Waffenrohres 1 gelenkt, wo sie den oberflächennahen Bereich 100 des Waffenrohres 1 aufschmelzen. Gleichzeitig wird der pulverförmige Schichtwerkstoff z.B. mittels eines Fördergases durch den Laserstrahl 12 hindurch auf den geschmolzenen Bereich der inneren Oberfläche 13 geblasen. Dabei schmilzt der Laserstrahl 12 den Schichtwerkstoff, so daß sich in dem entsprechenden oberflächennahen Bereich 100 des Waffenrohres 1 ein den geschmolzenen Waffenrohrwerkstoff und den Schichtwerkstoff enthaltendes Schmelzbad 14 ausbildet. Es kommt zu einer Legierungsbildung zwischen Grund- und Schichtwerkstoff. Dieser schmelzflüssige Verbund beider Werkstoffe führt dann zu einer sehr hohen Haftung des Schichtwerkstoffes an der inneren Oberfläche 13 des Waffenrohres 1.

Um eine Reaktion des schmelzflüssigen Schichtwerkstoffes mit der Umgebungsatmosphäre (und damit die Bildung von Oxiden, Nitriden oder Karbiden) zu verhindern, hat es sich als vorteilhaft erwiesen, wenn das Schmelzbad 14 von einem Schutzgasmantel umgeben wird. Hierzu wird das in der Schutzgasquelle 10 befindliche Schutzgas über die zweite Schlauchleitung 9 und eine nicht dargestellte Düsenanordnung entsprechend über das Schmelzbad 14 geblasen.

Eine flächige Beschichtung der inneren Oberfläche 13 des Waffenrohres 1 in dem Teilbereich 2 wird dadurch erhalten, daß der Laserkopf 4 und das Waffenrohr 1 relativ zueinander eine spiralförmige Bewegung ausführen. Hierzu kann beispielsweise der Laserkopf 4 mit Hilfe einer Verfahreinrichtung 15 sowohl eine axiale als auch eine rotatorische Bewegung durchführen. Ferner kann der Laserkopf 4 durch die Verfahreinrichtung 15 auch nur axial verschoben und das Waffenrohr 1 durch einen nicht dargestellten Antrieb um seine Seelenachse 16 gedreht werden.

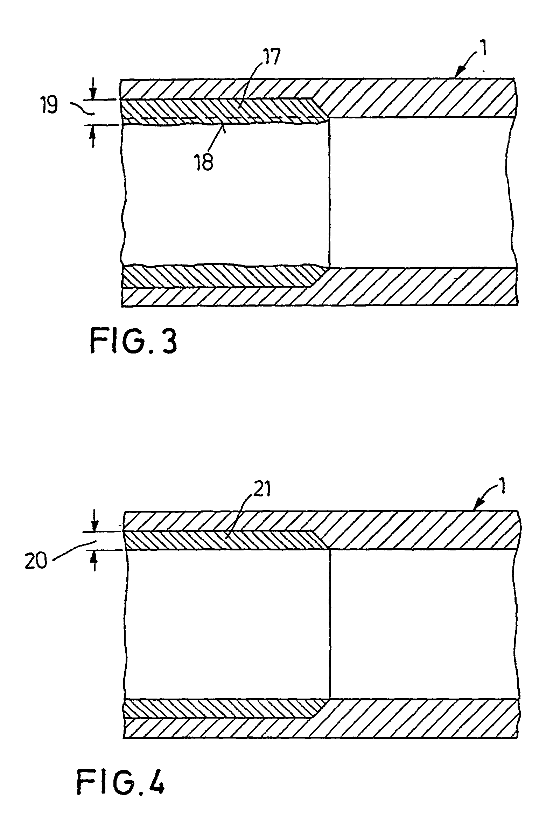

Nach vollständigem Aufbringen der Schicht 17 auf den Teilbereich 2 (Fig.3) erfolgt eine mechanische Nachbearbeitung, da die Schicht 17 eine relativ rauhe Oberfläche 18 aufweist. Die zunächst auf das Waffenrohr 1 aufzutragende Schichtdicke 19 der Schicht 17 muß daher größer sein als die Schichtdicke 20 der Schicht 21 des fertigen Waffenrohres (Fig.4).

Die Erfindung ist selbstverständlich nicht auf das vorstehend beschriebene Ausführungsbeispiel beschränkt. So kann beispielsweise zur Erzeugung des Schutzgasmantels vor dem Beschichtungsvorgang das gesamte Waffenrohr 1 mit dem entsprechenden Schutzgas geflutet werden. Alternativ kann auch auf einen Schutzgasmantel verzichtet werden und das Waffenrohr 1 vor dem Beschichtungsvorgang evakuiert werden.

Um eine Verbesserung der Haftfestigkeit zu erreichen, kann es außerdem vorteilhaft sein, statt nur einer Schicht eines Schichtwerkstoffes mehrere Schichten gleicher oder unterschiedlicher Schichtwerkstoffe nacheinander auf die innere Oberfläche des Waffenrohres aufzutragen.

Ferner lassen sich unter Verwendung von Zwischenschichten Werkstoffe auf das Grundmaterial (z.B. Stahl) auftragen, die sich direkt nicht auftragsschweißen lassen. So kann beispielsweise zum Auftragen einer Chrom- oder Molybdän-Beschichtung des Waffenrohres zunächst als Zwischenschicht eine Nickelbasislegierung auf das aus Stahl bestehende Waffenrohr aufgebracht werden. Die Schichtdicken der Deck- und Zwischenschichten sollten je nach Anwendungsfall zwischen 0,5 und 1,5 mm liegen.

### Bezugszeichenliste

- 1: Waffenrohr
- 2: Teilbereich
- 3: Übermaß
- 4: Laserkopf
- 5: Lichtleitfaser
- 6: Laser
- 7: erste Schlauchleitung
- 8: Behälter
- 9: zweite Schlauchleitung
- 10: Schutzgasquelle
- 11: Umlenkspiegel
- 12: Laserstrahl
- 13: innere Oberfläche
- 14: Schmelzbad
- 15: Verfahreinrichtung
- 16: Seelenachse
- 17: Schicht
- 18: Oberfläche
- 19,20: Schichtdicken
- 21: Schicht
- 100: oberflächennaher Bereich

## Patentansprüche

1. Verfahren zur Innenbeschichtung eines Waffenrohres (1), auf dessen innere Oberfläche (13) mindestens in einem Teilbereich (2) mindestens eine Schicht (21) eines Schichtwerkstoffes zur Vermeidung von Erosionen aufgebracht wird, mit den Merkmalen:
a) der Schichtwerkstoff wird durch Laser-Auftragsschweißen auf die innere Oberfläche (13) des Waffenrohres (1) aufgebracht, wobei
b) ein entsprechender Laserstrahl (12) auf die innere Oberfläche (13) des Waffenrohres (1) gelenkt wird und die oberflächennahen Bereiche (100) des Waffenrohres (1) aufschmilzt,
c) der Schichtwerkstoff in pulver-, draht- oder bandförmiger Form in den Laserstrahl (12) kurz vor dessen Auftreffen auf die innere Oberfläche (13) des Waffenrohres (1) eingebracht und durch diesen geschmolzen wird, so daß sich im oberflächennahen Bereich (100) des Waffenrohres (1) ein den geschmolzenen Waffenrohrwerkstoff und den Schichtwerkstoff enthaltendes Schmelzbad (14) ausbildet, welches bei der Weiterbewegung des Laserstrahles (12) erstarrt.

2. Verfahren nach Anspruch 1, **dadurch gekennzeichnet, daß** als Schichtwerkstoff Niob, Molybdän, Tantal, Hafnium, Chrom, Vanadin, Wolfram, Zirkonium oder deren Legierungen verwendet werden.

3. Verfahren nach Anspruch 1 oder 2, **dadurch gekennzeichnet, daß** mehrere Schichten gleicher oder unterschiedlicher Schichtwerkstoffe nacheinander auf die innere Oberfläche (13) des Waffenrohres (1) aufgetragen werden.

4. Verfahren nach Anspruch 3, **dadurch gekennzeichnet, daß** vor einer Innenbeschichtung eines aus Stahl bestehenden Waffenrohres (1) mit einem Schichtwerkstoff aus Chrom oder Molybdän eine Schicht aus einer Nickelbasislegierung auf die innere Oberfläche (13) des Waffenrohres (1) durch Laser-Auftragsschweißen aufgebracht wird.

5. Verfahren nach Anspruch 1, **dadurch gekennzeichnet, daß** zum Aufbringen eines Metallkarbides als Schichtwerkstoff auf die innere Oberfläche des Waffenrohres (1) beim Laser-Auftragsschweißen dem Schmelzbad (14) zusätzlich zu einem entsprechenden Metall Methan zugeführt wird.

6. Verfahren nach Anspruch 1, **dadurch gekennzeichnet, daß** zum Aufbringen eines Metallnitrides als Schichtwerkstoff auf die innere Oberfläche des Waffenrohres (1) beim Laser-Auftragsschweißen dem Schmelzbad (14) zusätzlich zu einem entsprechenden Metall Stickstoff zugeführt wird.

7. Verfahren nach einem der Ansprüche 1 bis 6, **dadurch gekennzeichnet, daß** im Falle einer pulverförmigen Materialzufuhr des Schichtwerkstoffes das Pulver koaxial oder unter einem vorgegebenen Winkel zur Längsachse des Laserstrahles (12) auf den geschmolzenen oberflächennahen Bereich (100) des Waffenrohres (1) aufgebracht wird.

8. Verfahren nach Anspruch 7, **dadurch gekennzeichnet, daß** die Pulverpartikel des Schichtwerkstoffes mittels eines Fördergases auf den oberflächennahen Bereich (100) des Waffenrohres (1) aufgebracht werden.

9. Verfahren nach einem der Ansprüche 1 bis 8, **dadurch gekennzeichnet, daß** die Schichtdicke (20) des jeweils aufzubringenden Schichtwerkstoffes zwischen 0,3 und 1 mm beträgt.

## Claims

1. A process for internal coating of a gun barrel (1), on the inner surface (13) of which, at least in a partial region (2), at least one layer (21) of a layering material is applied for the purpose of avoiding erosion, said process having the following features:
a) the layering material is applied onto the inner surface (13) of the gun barrel (1) by laser weld cladding, wherein
b) an appropriate laser beam (12) is directed onto the inner surface (13) of the gun barrel (1) and fuses the near-surface regions (100) of the gun barrel (1),
c) the layering material is introduced in pulverulent, wire-like or strip-like form into the laser beam (12) shortly before the incidence thereof on the inner surface (13) of the gun barrel (1) and is melted by said laser beam, so that in the near-surface region (100) of the gun barrel (1) a molten pool (14) containing the molten gun-barrel material and the layering material is formed which solidifies in the course of further movement of the laser beam (12).

2. Process according to Claim 1, **characterised in that** niobium, molybdenum, tantalum, hafnium, chromium, vanadium, tungsten, zirconium or alloys thereof are used by way of layering material.

3. Process according to Claim 1 or 2, **characterised in that** several layers of like or different layering materials are applied in succession onto the inner surface (13) of the gun barrel (1).

4. Process according to Claim 3, **characterised in that** prior to an internal coating of a gun barrel (1) made of steel with a layering material consisting of chromium or molybdenum a layer consisting of a nickel-based alloy is applied onto the inner surface (13) of the gun barrel (1) by laser weld cladding.

5. Process according to Claim 1, **characterised in that** for the purpose of applying a metal carbide by way of layering material onto the inner surface of the gun barrel (1) methane is supplied to the molten pool (14) in addition to an appropriate metal in the course of the laser weld cladding.

6. Process according to Claim 1, **characterised in that** for the purpose of applying a metal nitride by way of layering material onto the inner surface of the gun barrel (1) nitrogen is supplied to the molten pool (14) in addition to an appropriate metal in the course of the laser weld cladding.

7. Process according to one of Claims 1 to 6, **characterised in that** in the case of a pulverulent supply of the layering material the powder is applied onto the molten near-surface region (100) of the gun barrel (1) coaxially or at a predefined angle in relation to the longitudinal axis of the laser beam (12).

8. Process according to Claim 7, **characterised in that** the powder-type particles of the layering material are applied onto the near-surface region (100) of the gun barrel (1) by means of a carrier gas.

9. Process according to one of Claims 1 to 8, **characterised in that** the layer thickness (20) of the layering material to be applied in the given case amounts to between 0.3 mm and 1 mm.

## Revendications

1. Procédé de revêtement intérieur d'un tube d'arme (1) sur la surface intérieure (13) duquel est appliquée au moins dans une zone partielle (2), au moins une couche (21) d'un matériau de couche pour éviter des érosions, présentant les caractéristiques suivantes :
a) le matériau pour couches est appliqué par apport de matière par soudage au laser sur la surface intérieure (13) du tube,
b) un rayon laser (12) convenable étant dévié sur la surface intérieure (13) du tube (1) et faisant fondre les zones (100) proches de la surface du tube (1),
c) le matériau de couche sous forme de poudre, de fil métallique ou de bande, est introduit dans le rayon laser (12) juste avant qu'il ne parvienne sur la surface intérieure (13) du tube (1), et est fondu par celui-ci, de sorte qu'il se forme dans la zone (100) du tube (1) proche de la surface un bain de fusion (14) contenant le matériau fondu du tube et le matériau de couche, qui se solidifie au cours de la poursuite du mouvement du rayon laser (12).

2. Procédé selon la revendication 1, **caractérisé en ce qu'**on utilise comme matériau de couche du niobium, du molybdène, du tantale, de l'hafnium, du chrome, du vanadium, du tungstène, du zirconium ou leurs alliages.

3. Procédé selon la revendication 1 ou 2, **caractérisé en ce qu'**on applique successivement sur la surface intérieure (13) du tube (1), plusieurs couches de matériaux de couche identiques ou différents.

4. Procédé selon la revendication 3, **caractérisé en ce qu'**avant un revêtement intérieur d'un tube (1) constitué d'acier, avec un matériau de couche au chrome ou au molybdène, on applique une couche d'un alliage à base de nickel sur la surface intérieure (13) du tube (1), par apport de matière par soudage au laser.

5. Procédé selon la revendication 1, **caractérisé en ce que** pour appliquer un carbure métallique comme matériau de couche sur la surface intérieure du tube (1), on ajoute au bain de fusion (14), lors de l'apport de matière par soudage au laser, du méthane, en plus d'un métal convenable.

6. Procédé selon la revendication 1, **caractérisé en ce que** pour appliquer un nitrure métallique comme matériau de couche sur la surface intérieure du tube (1), on ajoute au bain de fusion (14), lors de l'apport de matière par soudage au laser, de l'azote en plus d'un métal convenable.

7. Procédé selon l'une des revendications 1 à 6, **caractérisé en ce que** dans le cas d'un apport de matière pulvérulent du matériau de couche, la poudre est appliquée sur la zone (100) fondue proche de la surface du tube (1), coaxialement ou suivant un angle prédéfini par rapport à l'axe longitudinal du rayon laser (12).

8. Procédé selon la revendication 7, **caractérisé en ce que** les particules de poudre du matériau de couche sont appliquées au moyen d'un gaz de transport sur la zone (100) proche de la surface du tube (1).

9. Procédé selon l'une des revendications 1 à 8, **caractérisé en ce que** l'épaisseur (20) de la couche du matériau de couche à appliquer dans chaque cas est comprise entre 0,3 et 1 mm.
